# EUROPEAN PATENT SPECIFICATION

(11) **EP 1 673 150 B1**
(45) Date of publication and mention of the grant of the patent: **28.11.2012**
(21) Application number: 04784331.3
(22) Date of filing: 17.09.2004
(51) Int. Cl.: A63F 13/00, A63F 13/12

(54) **SYSTEM AND METHOD FOR CONTROLLING ACCESS TO A MASSIVELY MULTIPLAYER ON-LINE ROLE-PLAYING GAME**
SYSTEM UND VERFAHREN ZUR STEUERUNG DES ZUGRIFFS AUF EIN ONLINE-ROLLENSPIEL MIT EINER GROSSEN ZAHL VON SPIELERN
LE SYSTEME EST PROCEDE DE COMMANDES D'ACCES A UN JEU DE ROLES EN LIGNE MASSIVEMENT MULTIJOUEUR

(30) Priority: 18.09.2003 US 504566 P
(43) Date of publication of application: 28.06.2006
(73) Proprietor: Turbine, Inc., Westwood MA 02090 (US)
(72) Inventor: HOGAN, Mike, Charlton, MA 01507 (US); AUSTREW, Eric, Brighton, MA 02135 (US); DUPRAS, Derek, Whitinsville, MA 01588 (US); CUNNINGHAM, Sean, JamaicaPlain, MA 02130 (US)
(74) Representative: Cabinet Plasseraud
(86) International application number: PCT/US2004/030441
(87) International publication number: WO 2005/028054

(56) References cited:
- US-A1- 2002 049 806
- ID SOFTWARE: "Quake 3: Arena" QUAKE 3 ARENA SERVER ADMINISTRATION CONSOLE, 30 November 1999 (1999-11-30), XP002310290
- "EVERQUEST TRILOGY - DOWNLOAD DEMO" SONY INTERACTIVE WEBSITE, 28 February 1999 (1999-02-28), XP002287779

## Description

### FIELD OF INVENTION

This invention relates generally to multiplayer computer games, and in particular, to methods for limiting access to a massively multiplayer on-line role-playing game.

### BACKGROUND

A massively multiplayer game ("MMP") is a computer game played by a large number of users through a communications network, which can be a local area network (e.g., Ethernet), a medium-area network (e.g., an intranet), or a wide-area network (e.g., the Internet). In addition, the communications network can be a wireless network, a cellular network or any other system which facilitates the transmission of data. In MMPs, humans and their avatars within the game ("players") are free to interact with other players as well as autonomous "non-player characters" which inhabit and are part of the game. Early examples of MMPs include games such as Ultima Online, EverQuest, and CrossGate.

WO-00/40028 discloses a system and method for providing a virtual channel using a home entertainment device, where a supervisor can set permissions, stored remotely in a database, for the users of the virtual channel. The virtual channel can include television programs and video games.

Most MMPs are fantasy role-playing games ("RPGs") which take place within a mythical or mystical world. Most MMPs appear timeless, in that from the player's perspective they have no beginning and no end. New players can join a game in progress at any time, and do not need to wait for the start of a new game. In addition, many MMPs do not even define an absolute game endpoint, making the end of a game a logical impossibility. Thus, once a game has started, it can continue indefinitely. The players of that MMP are thereby involved in a continuing storyline akin to life within the real world. MMPs allow players to develop their avatars, form personal relationships with other players, and to enjoy social interaction through the reality of the game.

Unfortunately, the ongoing, immersive nature of massively multiplayer on-line role playing games (MMORPGs) causes many players to spend large amounts of time engaged in active game play. The reasons for this are manifold. Some players may fear missing an important development in the game. Others may play constantly in order to further develop their character and develop their characters more rapidly than other players of the game.

A second problem associated with MMORPGs is that the "world" in which play take place is a virtual one that is not easily monitored by supervising individuals. For example, in the case of minors, a parent or guardian has no way of knowing when or for how long the player has played the game, nor can a parent or guardian ensure that the minor does not engage in objectionable behavior while playing the game.

Accordingly, new methods are needed to control access of players to MMORPGs and to monitor their usage of the game.

### SUMMARY OF THE INVENTION

The present invention provides systems and methods for controlling access to a MMORPG that can be configured to control access at certain times or for certain periods of time. It also provides a convenient way for a supervising user to review the behavior of a player without requiring the supervising user to continually monitor the action of the player. In some embodiments, the systems and methods disclosed may be used by a player of the MMORPG to self-regulate involvement in the game.

The present invention is set out in the claims.

### BRIEF DESCRIPTION OF THE DRAWINGS

These and other aspects of this invention will be readily apparent from the detailed description below and the appended drawings, which are meant to illustrate and not to limit the invention, and in which:

FIG. 1 is a block diagram showing a distributed computer system in accordance with one embodiment of the present invention;

FIG. 2 is a block diagram of an embodiment of a computer useful in connection with the present invention;

FIG. 3 is a block diagram showing one embodiment of a distributed system in which a computer is used to set parameters controlling access to the game;

FIGs. 4-5D are screenshots showing an embodiment of a screen used to collect parameter data for controlling access to the game; and

FIG. 6 is a flowchart depicting one embodiment of the steps taken by a game server utilizing gameplay parameters supplied by a database server.

### DETAILED DESCRIPTION

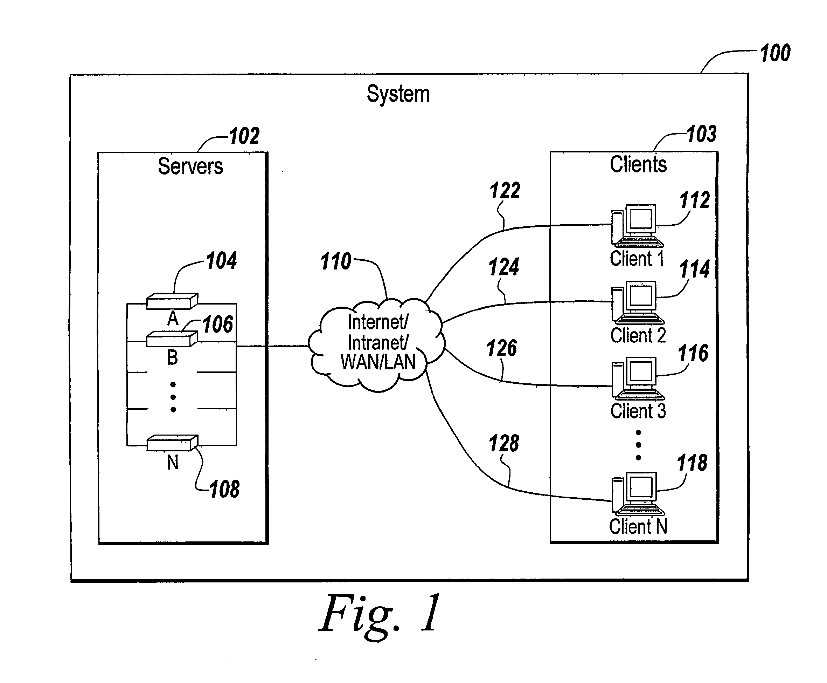

While the content and nature of MMPs is the key to their widespread success, it is important to understand the technological underpinnings of a typical MMP. Although it is possible to host and play a computer game, and even an MMP, on a single computer, it is not preferred for MMPs. FIG. 1 illustrates a distributed computer system 100 in accordance with one embodiment of the present invention. The system 100 includes a server platform 102 and one or more client systems 112, 114, 116, 118 communicating via a communications network 110. In the embodiment depicted in FIG. 1, the server platform 102 includes a plurality of individual servers 104, 106, 108. In other embodiments the server platform 102 may comprise a single server. The number of clients is virtually limitless, constrained only by the physical characteristics of the server platform 102, and the communications network 110 connecting the two. The topology of the network 110 over which the client nodes 112, 114, 116, 118 communicate with the server platform 102 may be a bus, star, or ring topology. The network 110 can be a local area network (LAN) such as Ethernet, a metropolitan area network (MAN) such as an intranet, or a wide area network (WAN) such as the Internet. In other embodiments, the communications network 110 could include, without limitation, a wireless network, a cellular network or any other system which facilitates the transmission of data. Each client 112, 114, 116, 118 has an associated communications link (or session) with one or more of the servers 104, 106, 108. As shown in Figure 1, client 1 112 could communicate with server A 104 via communications link 122. Similarly, client 2 114 could communicate with server B 106 via communications link 124. As shown in FIG. 1, the communications network 110 may be a dedicated network or a shared network such as the Internet. As will be appreciated, the system 100 is a distributed virtual environment tailored to facilitate MMPs.

The client systems 112, 114, 116, 118 and servers 104, 106, 108 can connect to the network 110 through a variety of connections including standard telephone lines, LAN or WAN links (e.g., T1, T3, 56 kb, X.25), broadband connections (ISDN, Frame Relay, ATM), and wireless connections. Connections can be established using a variety of communication protocols (e.g.,.TCP/IP, IPX, SPX, NetBIOS, Ethernet, ARCNET, Fiber Distributed Data Interface (FDDI), RS232, IEEE 802.11, IEEE 802.1 la, and direct asynchronous connections). Other client nodes and server nodes (not shown) may also be connected to the network 110. In other embodiments, client systems may connect to servers using separate, distinct networks.

Each client 112, 114, 116, 118 is generally responsible for displaying interacting objects (other players, terrain, non-player characters, etc.), displaying the game's interface, processing a player's inputs, playing music and sounds, and performing other CPU or bandwidth intensive operations. The client nodes 112, 114, 116, 118 can be any device capable of displaying video, audio or tactile game content and receiving user input for game interaction. Client nodes 112, 114, 116, 118 may be personal computers, windows-based terminals, network computers, information appliances, palmtop computers (such as the Series 7 by Psion PLC), X-devices, workstations, mini computers, personal digital assistants (such as the Tungsten C by Palm Inc.), portable digital handheld game systems (such as the Gameboy Advance by Nintendo of America Inc.), game consoles (such as the Play Station 2 by Sony Corporation of America), or cellular telephones (such as the Motorola Inc. A388c).

For embodiments in which the client 112, 114, 116, 118 is a personal computer, the client may be constructed around the Pentium family of processors manufactured by Intel Corp. of Mountain View, California, which includes the Pentium, Pentium II XEON, Celeron, and Pentium III microprocessors, the Power PC line of processors manufactured by Motorola Corp. of Schaumburg, Illinois, or the Crusoe line of processors manufactured by TransMeta Corp. of Santa Clara, California. In these embodiments, the client nodes 112, 114, 116, 118 can operate under the control of a variety of operating systems including, but not limited to, WINDOWS 3.x, WINDOWS 95, WINDOWS 98, WINDOWS 2000, WINDOWS NT 3.51, WINDOWS NT 4.0, WINDOWS CE, and WINDOWS XP, all of which are manufactured by Microsoft Corporation of Redmond, Washington, MacOS, manufactured by Apple Computer of Cupertino, California, Java, UNIX, or Linux.

In other embodiments, the client 112, 114, 116, 118 may have different processors, operating systems, and input devices consistent with the device. For example, in one embodiment the client node is a Zire 71 personal digital assistant manufactured by Palm, Inc. of Santa Clara, California In this embodiment, the Zire 71 operates under the control of the PalmOS operating system and includes a stylus input device as well as a five-way navigator device.

Each of the servers 104, 106, 108 generally coordinates communication, database storage, and overall control and administration of the game. The servers 104, 106, 108 generally maintain state information and coordinate client interaction with various objects in a virtual environment, including but not limited to other clients, vehicles, artificial intelligence, terrain, music and sound. Each server 104, 106, 108 provides additional functions, such as security, recording game goals and scoring and tracking each player's advancement towards those goals. The server nodes 104, 106, 108 can be any computing device that stores files representing game elements and capable of receiving and processing game input. The servers 104, 106, 108 can be provided as a group of server systems logically acting as a single server system, referred to herein as a server farm. In one embodiment, the servers 104, 106, 108 are a multi-user server system supporting multiple concurrently active client connections. Servers 104, 106, 108 may be computers based on the Pentium family of processors manufactured by Intel Corp. of Mountain View, California, which includes the Pentium, Pentium II XEON, Celeron, and Pentium III microprocessors, the Power PC line of processors manufactured by Motorola Corp. of Schaumburg, Illinois, or the Crusoe line of processors manufactured by TransMeta Corp. of Santa Clara, California. The servers 104, 106, 108 may operate under the control of a variety of operating systems including, but not limited to, WINDOWS 3.x, WINDOWS 95, WINDOWS 98, WINDOWS 2000, WINDOWS NT 3.51, WINDOWS NT 4.0, WINDOWS CE, and WINDOWS XP, all of which are manufactured by Microsoft Corporation of Redmond, Washington, MacOS, manufactured by Apple Computer of Cupertino, California, Java, UNIX, or Linux.

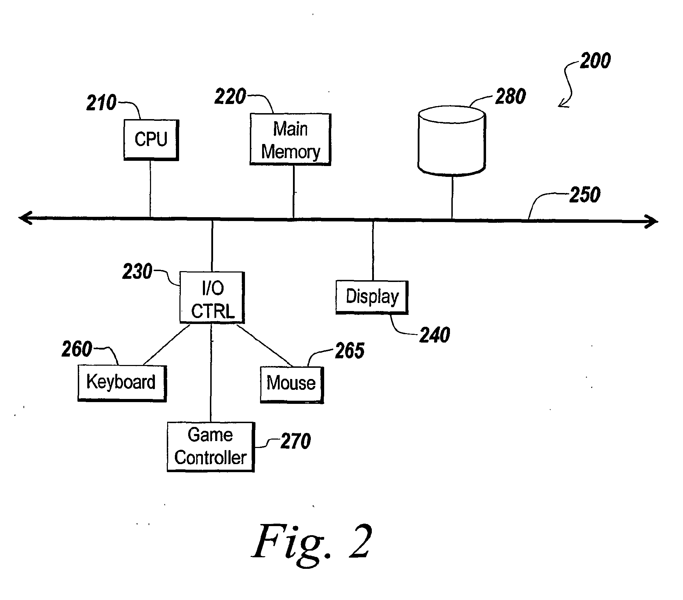

FIG. 2 depicts a block diagram of a typical computer 200 that may be used as a client 112, 114, 116, 118 or server 104, 106, 108. As shown in FIG. 2, the computer 200 includes a central processor 210, a main memory unit 220 for temporarily storing programs and/or data, an input/output (I/O) controller 230, a display device 240, and a data bus 250 coupling these components to allow them to communication with each other. The data bus 250 may be a VESA bus, a VESA VL bus, an ISA bus, an EISA bus, a PCI bus, a NuBus, or a MicroChannel Architecture bus. In some embodiments, the display device 240 communicates with the data bus 250 via a video card (not shown), such as the Radeon 7000 Mac Edition PCI video card, manufactured by ATI Technologies of Santa Clara, California. The main memory unit 220 may include both random access memory (RAM) and read only memory (ROM) chips. The computer 200 typically also has one or more input/output devices, such as a keyboard 260, a mouse 265, or a game controller 270 connected to the I/O controller 230. In some embodiments, the computer 200 includes dedicated circuitry for producing sound, such as a "sound card" (not shown). In some of these embodiments the sound card is controlled by the I/O controller 230. In other of these embodiments, the sound card interfaces directly to system bus 250.

As shown in FIG. 2, the computer 200 typically also has a hard disk drive 280. The computer may optionally provide other storage devices (not shown in FIG. 2) such as a floppy disk drive for receiving floppy disks such as 3.5-inch or 5.25-inch disks, a CD-ROM drive, a CD-R drive, a CD-RW drive, a DVD-ROM drive, or tape drives of various formats. In still other embodiments, the computer 200 may provide USB connections to receive handheld USB storage devices such as the USB Flash Drive line of devices manufactured by Twintech Industry, Inc. of Los Alamitos, California.

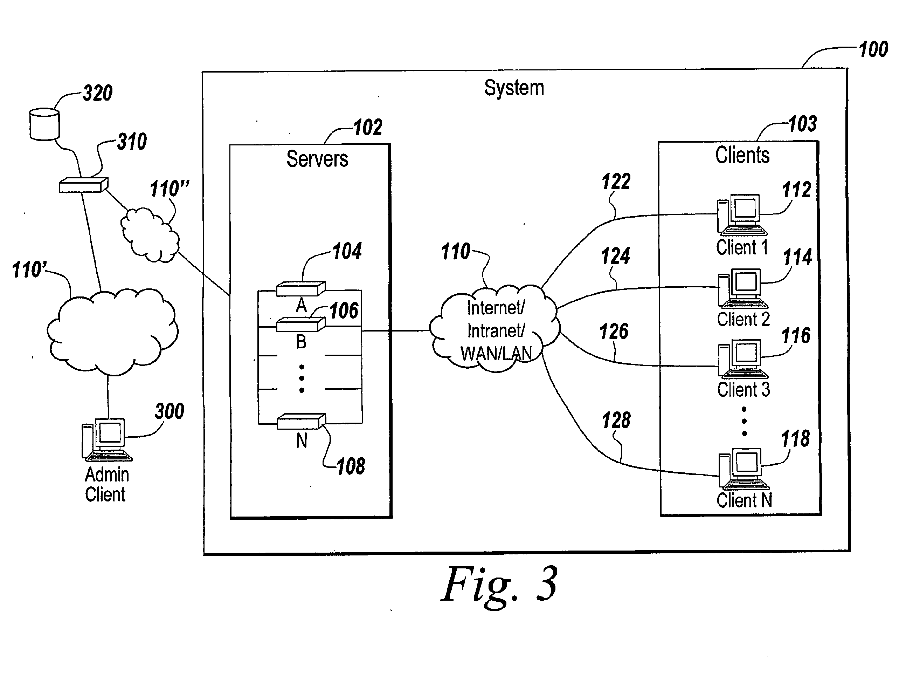

Referring now to FIG. 3, an administration client 300 is used to connect to an administration server 310 via a second communications network 110'. In some embodiments, the administration client 300 may be one of the clients 112, 114, 116, 118 used for enjoyment of the game. In still other embodiments, the administration client 300 may be a personal computer, a windows-based terminal, network computer, information appliance, palmtop computer, X-device, workstation, mini computer, personal digital assistant, portable digital handheld game, or game console not typically used for enjoying the game, or it may be a cellular telephone or line-based telephone. The administration server 310 may be one of the servers included in the server platform 102. In other embodiments, such as the one shown in FIG. 3, the administration server 310 is separate from, but in communication with, the server platform 102 via a third communications network 110". The administration server 310 includes a database, shown as 320 in FIG. 3. The database 320 may be a relational database, such as MicroStrategy 7i, manufactured by MicroStrategy, Inc. of McLean, Virginia or Transformation Server, manufactured by DataMirror Corporation of Toronto, Canada. In other embodiments, the database 320 may be provided as a flat-file database, such as JET, manufactured by Microsoft Corporation of Redmond, Washington.

The second communications network 110' may be a different portion of the same public network that the clients 112, 114, 116, 118 use to connect to the server platform 102. In other embodiments, the second communications network 110' is physically separate from communications network 110. For embodiments in which the administration client 300 is a personal computer, a windows-based terminal, network computer, information appliance, palmtop computer, X-device, workstation, mini computer, personal digital assistant, portable digital handheld game, or game console, the communications network 110' may be provided as a packet-switched network such as the Internet. In some of these embodiments the administration client 300 may communicate with the server platform 102 the Point-to-Point (PPP) communications protocol or the Serial Line Internet Protocol (SLIP).

For embodiments in which the administration client 300 is a cellular telephone it may communicate with the server platform via the Wireless Access Protocol (WAP) or i-Mode. For embodiments in which the administration client 300 is a telephone, the communication network 100' may use plain old telephone service (POTS).

The third communications network 110" may be a different portion of the same public network that the clients 112, 114, 116, 118 use to connect to the server platform 102. In other embodiments, the third communications network 110" is physically separate from communications network 110. In other embodiments, the third communications network 110" is part of the second communications network 110', both of which are separate from communications network 100. In still other embodiments, the third communications network 110", the second communications network 110', and the communications network 110 are all part of the same network.

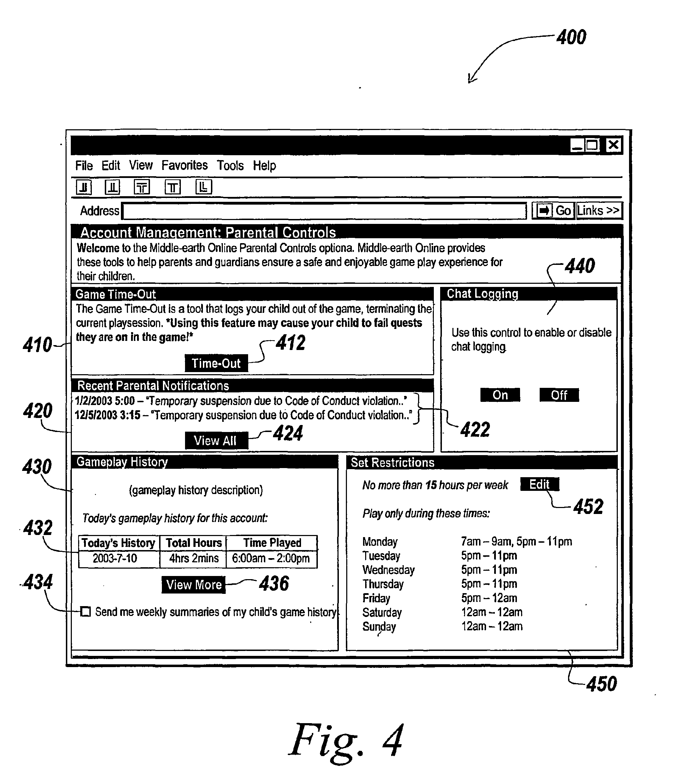

FIG. 4 depicts one embodiment of a screen shot presented to a user of the administration client 300 (referred to as a "supervising user") upon connection and proper authentication to the administration server 310. Although shown in FIG. 4 as a separate client, the administration client can be any client system 112, 114, 116, 118 used by a properly authenticated user. The supervising user may authenticate herself to the administration server 310 using any one of a number of well-known techniques including, but not limited to, passwords, passphrases, certificates, token-based techniques, public key techniques, or biometric techniques.

FIG. 4 depicts a screen shot embodiment in which the administration client 300 communicates with the administration server 310 with the aid of a browser program, such as INTERNET EXPLORER, manufactured by Microsoft Corporation of Redmond, Washington or SAFARI, manufactured by Apple Computer, of Cupertino, California. In other embodiments, the administration client 300 may not require a browser program to communicate with the administration server 310. For example, the administration server 310 may execute a traditional client-server program in which the application executes on the administration server 310 and application output is transmitted to the administration client 300 using a presentation-level protocol such as X-Windows. In other embodiments, the administration client 300 is an application program that is specifically written to execute on the client system 112, 114, 116, 118. In still other embodiments, as noted above, the administration client 300 may be a cellular telephone or standard telephone. In these embodiments, the administration server 310 may communicate with the administration client 300 using a voice menu instead of a screen of visual data.

Once the supervising user has authenticated herself, selected the game-playing user for which she wishes to enter account parameters, and the administration server 310 has verified that the supervising user has the right to change the account parameters for that particular game-playing user, the administration server 310 provides a number of dialog boxes for setting parameters associated with the game-playing user's account. In the embodiment shown in FIG. 4, five dialog boxes are present: a Game Time-Out dialog 410, a Parental Notifications dialog 420, a History dialog 430, a Chat Logging dialog 440, and a Restrictions dialog 450. The dialog boxes 410, 420, 430, 440, 450 can be implemented as HTML code within an HTML page describing the screen 400. Alternatively, each dialog box may be implemented as an ActiveX control or JAVA applet. In still other embodiments the dialog boxes 410, 420, 430, 440, 450 may be created by application code specifically written to execute on the target client device.

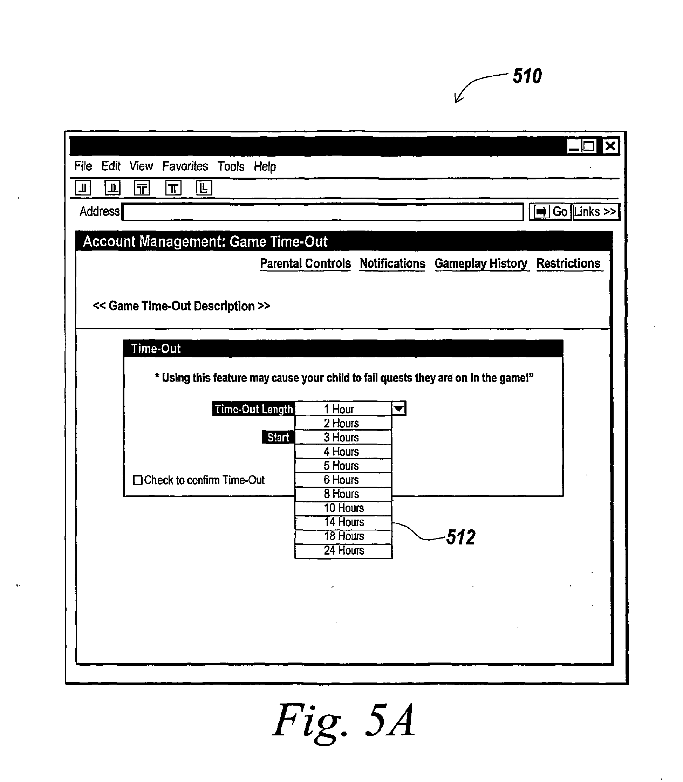

The Game Time-Out dialog 410 allows a user to specify the maximum length of time for a single game session. A user clicks the Time-Out button 412 to specify parameters for this control. FIG. 5A depicts an embodiment of a page 510 delivered to the administration client 300 when the Time-Out button 412 is clicked. In the embodiment shown in FIG. 5A, the page includes a pull-down menu 512 allowing one of multiple time-out lengths to be selected. In other embodiments, the time-out length may be selected using radio buttons. Alternatively, the time-out length may be provided by the supervising user in a blank field. Upon selection or entry of a time-out length, the time-out length is transmitted to the administration server 310, which stores it in a database record corresponding to the player's account.

In other embodiments, the page 510 may include a control for immediately logging a game-playing user out of the game. In these embodiments, activation of that control causes a message to be sent to the server platform 102 to terminate the session associated with the identified player. In still other embodiments, the page 510 may include a control for locking the player's account. In these embodiments, a locked account prevents a player from accessing the game until the account is unlocked.

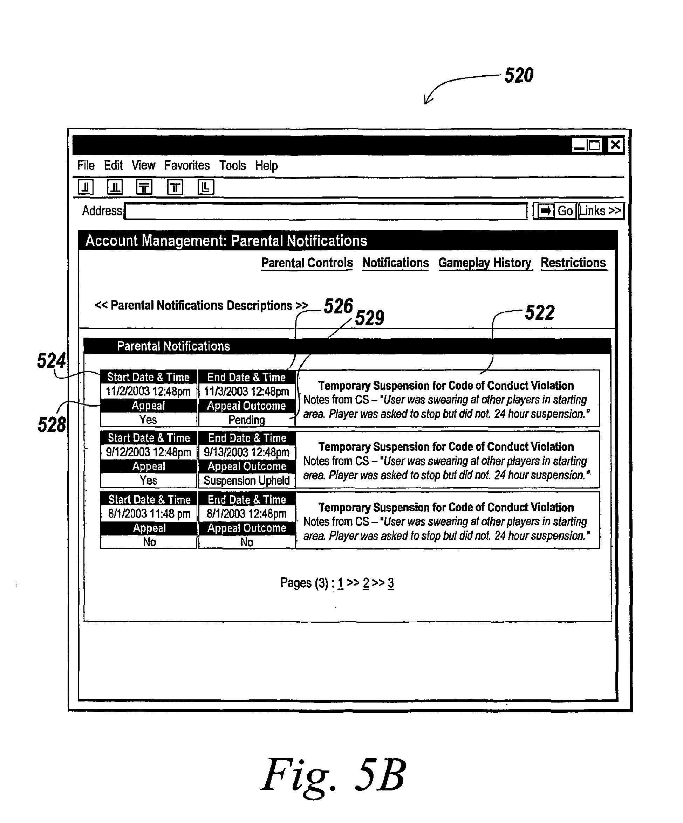

Referring again to FIG. 4, the Parental Notifications dialog 420 displays information to a supervising user relating to the behavior of the identified player. In the embodiment shown in FIG. 4, the Parental Notifications dialog 420 includes summary information 422 regarding the most recent behavior events that have occurred. Although the embodiment shown in FIG. 4 relates to negative behavioral events, positive behavior events, such as achievement of goals in the game, may also be displayed. The depicted embodiment of the Parental Notifications dialog 420 also includes a "View All" button 424. Clicking the "View All" button 424 causes a message to be sent to the administration server 310. In response to the message, the administration server 310 queries the database 320 for a complete list of behavior events for the specified player. In HTML embodiments, the administration server 310 responds with an HTML page of the sort depicted in FIG. 5B. As shown in FIG. 5B, the Parental Notifications page 520 includes additional information regarding the behavior event 522, the start time of any discipline imposed 524, the end time of any discipline imposed 526, whether the player appealed the discipline 528 and the status of the appeal 529. As shown in FIG. 5B, multiple Parental Notification pages 520 may be required.

In other embodiments, the Parental Notifications dialog box 420 may include a control allowing the supervising user to request a copy of each parental control notification by email or SMS message as it occurs. In still other embodiments, the Parental Notifications dialog box 420 may include a field for entering a limit on the number of negative parental notifications that may be received. In these embodiments, when the number of negative parental notifications exceeds the entered limit, the player's account is locked. In still others of these embodiments, the supervising user may specify a time period during which, if the number of negative parental controls received exceeds the limit, the player's account is locked.

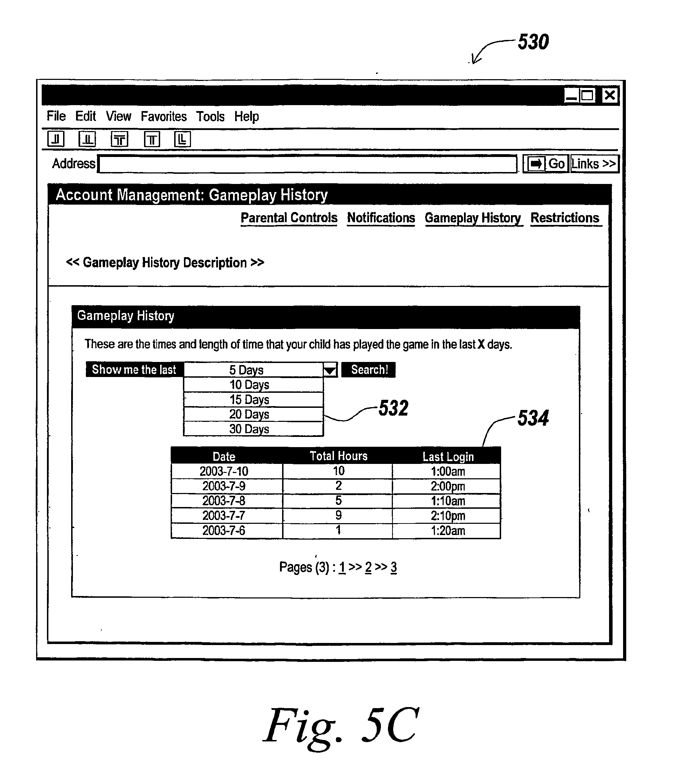

The Gameplay History dialog box 430 provides information to the supervising user concerning gameplay statistics for the player's account. In the depicted embodiment, the history for a single day is listed in detail box 432. As shown in the depicted embodiment, the detail box includes the date, the total amount of time spent playing the game by the player, and the earliest and latest time during the day that the player was active. The embodiment depicted in FIG. 4 includes a check box for requesting weekly summaries of the player's activity. The requested summaries may be sent to the supervising user by email or as an SMS message. The depicted embodiment also includes a "View More" button 436. Clicking the "View More" button 436 causes a message to be sent to the administration server 310. In response to the transmitted message, the administration server 310 queries the database 320 to compile statistics concerning the gameplay history of the specified user. In HTML embodiment, an HTML file of the sort depicted in FIG. 5C is displayed to the supervising user.

The embodiment of a Gameplay History screen 530 depicted in FIG. 5C includes a pull-down menu 532 allowing the supervising user to specify the number of days for which gameplay statistics are requested. In other embodiments, the history value may be selected using radio buttons. Alternatively, history value may be provided by the supervising user in a blank field. Upon selection or entry of a history value, it is transmitted to the administration server 310, which queries the database 320 to retrieve the appropriate number of values from concerning the specified user's gameplay history. Also included in the embodiment of a Gameplay History page 530 as shown in FIG. 5C is a table 534 that includes the total number of hours spent playing the game and the last login time for each day.

A well-known feature of online games is the ability to "chat" with other players of the game. A player types text into a text field that is transmitted to another player. The transmitted text appears on the other player's screen. The Chat Logging dialog 440 enables or disables storage of "chats." When a supervising user clicks the "On" button 442 in the Chat Logging dialog box 440, that selection is transmitted to the administration server 310, which stores the parameter in a database record corresponding to the game-playing user's account.

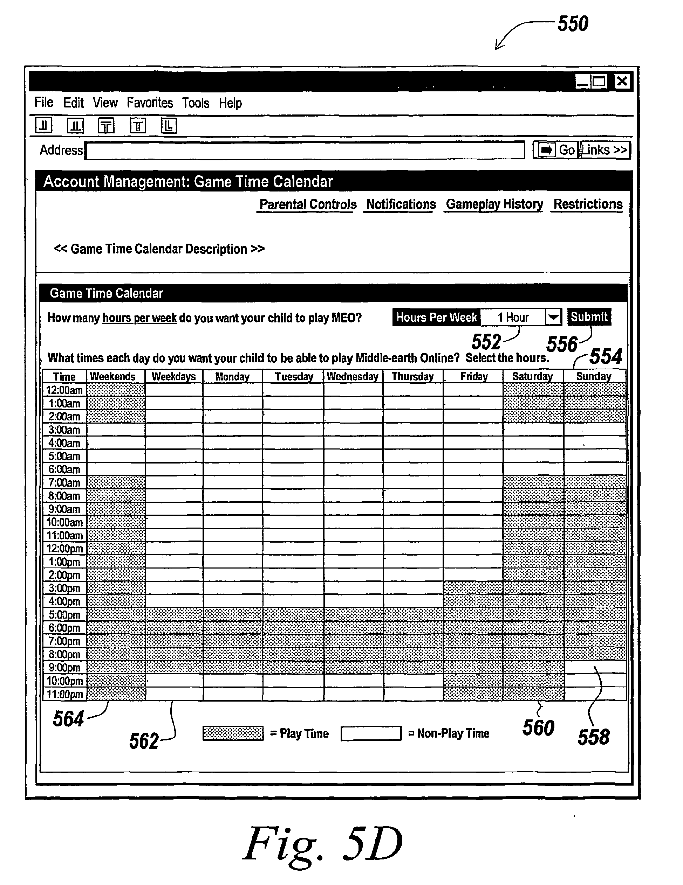

The Restrictions dialog 450 allows a supervising user to set parameters controlling specific times and durations for which a player will be allowed to play the game. In the embodiment shown in FIG. 4, a supervising user may set the amount of time per week a player may play the game or may control the specific times during the week that a player may play. Clicking the "Edit" button 452 causes a message to be sent to the administration server 310. In HTML embodiments, the administration server 310 responds with an HTML page 550 of the sort depicted in FIG. 5D. In the embodiment shown in FIG. 5D, a "Game Time Calendar" page 550 is displayed to the supervising user. The page 550 includes a pull-down menu 552 allowing a supervising user to select the amount of time per week a player may play the game. The page 550 also includes a calendar that allows a supervising user to specify blocks of time during which a player may play the game and blocks of time during which a player may not play the game. In some embodiments, selection of a block of time is accomplished by clicking on the rectangle representing the time period. For example, in the embodiment depicted in FIG. 5D, a supervising user may enable playing Sunday nights from 9:00 PM to 10:00 PM by clicking rectangle 558. Similarly, in the depicted embodiment, a supervising user may disable playing Saturdays from 11:00 PM to midnight by clicking rectangle 560.

The embodiment depicted in FIG. 5D also includes a "Weekdays" column 562 and a "Weekends" column 564. These columns allow a playing to be enabled or disabled uniformly across Monday through Friday or Saturday and Sunday, respectively. Once a supervising user has specified a total amount of time game play is allowed and specific time periods during which game play is allowed, the supervising user clicks the "Submit" button 556 to transfer the parameters to the administration server 510. The administration server 310 stores the transmitted parameters in a database record associated with the player.

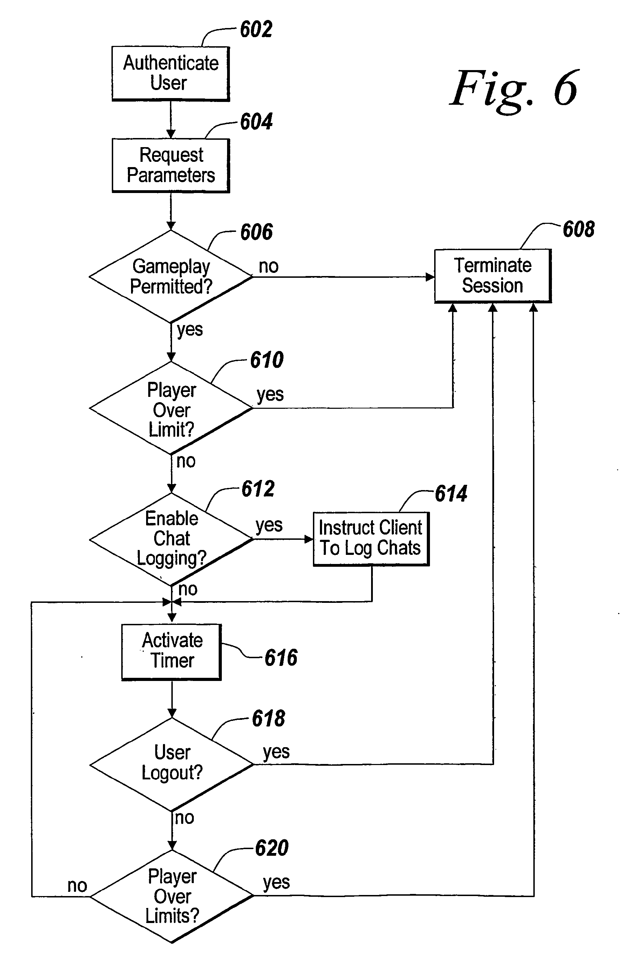

Referring now to FIG. 6, a flowchart showing one embodiment of the steps taken by the server platform 102 when a user logs into the game is shown. The user authenticates herself to the server platform 102 (step 602). Once authenticated, the server platform 102 requests gameplay parameters from the administration server 320 (step 604). Upon receipt of the player's gameplay parameters, the server platform 102 determines whether the user is prohibited from logging into the game by comparing the current date and time to information entered via the Gameplay Calendar 562 (step 606). In other embodiments, the server platform 102 checks whether the user has been explicitly banned by game administrators or by supervising users. If play is not allowed at the current date and time the player's session is terminated (step 608). Otherwise, the server platform 102 checks the total time played by the player during this period and compares it to the limit entered in the Restrictions pull-down menu 552 (step 610). If the player has exceeded her time allotment for the current period, the server platform 102 terminates her session (step 608). Otherwise, the server platform 102 checks the player's parameters to determine if chat logging has been enabled (step 612). If so, the server platform 102 transmits a message to the player's client to log all chat activity (step 614) and play begins. Otherwise, play begins without chat logging. The server platform 102 activates a timer during gameplay to track the amount of time played by the user. During gameplay the user may voluntarily logout (step 618). During active gameplay, the server platform 102 periodically checks the amount of time spent by the user to determine if the user has exceeded her allotted time or to determine if the user has entered a time period for which play is prohibited (step 620). If this occurs, the server platform102 terminates the player's game session.

Still referring to FIG. 6 and in more detail, the player authenticates herself to the server platform 102 (step 602). The player may authenticate herself to the server platform 102 using any one of a number of well-known techniques including, but not limited to, passwords, passphrases, certificates, public key techniques, or biometric techniques.

Once the player is properly authenticated, the server platform 102 requests gameplay parameters for the authenticated player from the administration server 310 (step 604). The server platform 102 may issue a Common Gateway Interface (CGI) request using the HyperText Transfer Protocol (HTTP) to the administration server 310. In other embodiments, the server platform 102 transmits an SQL-compliant database query to the administration server 310. In still other embodiments, the server platform 102 may issue an XML-RPC request using the HyperText Transfer Protocol (HTTP) or other suitable interface mechanism to the administration or other intermediary server. Other embodiments may include SOAP, RPC, or DCOM. The administration server 310 retrieves gameplay parameters for the authenticated player and transmits the parameters to the server platform 102.

In the embodiment of steps shown in FIG. 6, the server platform 102 first checks the gameplay calendar to determine if the player is permitted to play during this time period (step 606). In some embodiments, this determination is effected by comparing the current time to a table representing the gameplay calendar. The table includes each time period with a flag indicating whether gameplay is permitted or not during the associated period. If the gameplay calendar indicates that gameplay is prohibited, the player's session is terminated (step 608). In some embodiments, the server platform 102 may terminate a player's session if the player attempts to login to the game with insufficient time to play, e.g., five minutes before a prohibited period of time. Time period information may be stored relative to the game player's local time or relative to a referenced time zone, such as Greenwich Mean Time (GMT).

If the gameplay parameters indicate that play is allowed during the current time period, in the embodiment shown in FIG. 6, the server platform 610 next checks to determine if the player has exceeded total allowed game time during the period (step 612). In some embodiments, this is done by comparing a value representing total time played to the time limit entered in the Restrictions pull-down menu 552. If the player's totals for game play exceed the entered limit, the player's session is terminated (step 608). In some embodiments, the server platform 102 may terminate the player's session if insufficient time remains to achieve meaningful interaction with the game.

If the player is authorized to play during the current time period and has not exceeded her gameplay time limits, the server platform 102 checks the player's gameplay parameters to determine if chat logging should be enabled (step 612). If not, active gameplay starts at once. If, however, chat logging should be enabled, the server platform 102 transmits a message to the player's client instructing it to log all chat activity (step 614). In some embodiments, the client effects chat logging by storing a copy of all outgoing and incoming chat messages in a secure file on the client platform that may only be accessed by the supervising user. In other embodiments, the client platform transmits a copy of all outgoing and incoming chat messages to a separate computer or to the administration client 310 for storing and later review by the supervising user. In still other embodiments, the client may store all chat messages in a file which is emailed to the supervising user. In some of these embodiments, the client may send batches of chat messages without regard to whether the current chat session has ended.

In the embodiment depicted in FIG. 6, the server platform 102 activates a timer during active gameplay (step 616). If the user voluntarily logs out of the game (step 618), the player's session is terminated (step 608). Otherwise, the timer value is used to ensure that the player does not exceed gameplay limits during the current session (step 620). In some embodiments, this is accomplished be periodically adding together the timer value with the gameplay total from the player's gameplay parameters. The total is checked at any interval determined to provide sufficient resolution. This total may checked every hour, every half hour, every fifteen minutes, every five minutes or every minute. If the total exceeds the player's gameplay limit, the user's session is terminated (step 608).

The server platform 102 also periodically checks the gameplay calendar to determine if the user is authorized to play during the current time period (step 620). The total is checked at any interval determined to provide sufficient resolution. The may be done by the server platform 102 once an hour. In other embodiments, the administration server may send a message to the server platform 102 at the start of each hour with a list of players prohibited from playing during the next hour. If any of those users are logged in, their game sessions are terminated. In other embodiments, the server platform 102 may send a message to a centralized access system or other intermediary system or server with a request that is checked against a database for access.

Although it has been described with respect to a supervising user and a game player, it is contemplated that certain players may provide parameters for their own account in a form a self-regulation. Players may do this because they recognize that they spend excessive amounts of time playing the game. Alternatively, players may use these parameters to stay within certain financial boundaries. For example, a player that pays a set price for twenty hours of game access with additional fees required for each hour over twenty can instruct the game to prohibit her access to the game in excess of twenty hours.

The present invention can be provided as one or more computer-readable programs embodied on or in one or more articles of manufacture. The article of manufacture can be a floppy disk, a hard disk, a CD ROM, CD-R, CD-RW, DVD, DVD-RAM a flash memory card, a USB storage device, a PROM, a RAM, a ROM, or a magnetic tape. In general, the computer-readable programs can be implemented in any programming language. Some examples of languages that can be used include C, C++, or JAVA. The software programs can be stored on or in one or more articles of manufacture as object code.

Methods and systems to limit player access to a MMP have been described with respect to preferred embodiments; however, the methods and systems of the present invention are not limited to the preferred embodiments. In particular, various arrangements of data to be stored in the database and used to control access are readily apparent to those of ordinary skill in the art. The skilled artisan will readily appreciate that various omissions, additions and modifications can be made to the methods and systems described above without departing from the scope of the invention, and all such modifications and changes are intended to fall within the scope of the invention, as defined by the appended claims.

## Claims

1. A method for parental control of access to an online game, comprising:
(a) presenting a user interface to a supervising user, the supervising user being a parent or guardian of a minor user;
(b) receiving, via the user interface, a parameter for controlling times at which the minor user can access the online game;
(c) transmitting to a database server the received parameter;
(d) storing the received parameter in a database record associated with the minor user;
(e) receiving, at a game server, a connection request from a computer being used by the minor user;
(e') authenticating the identity of the minor user who is using the computer that made the connection request received by the game server; and
(f) controlling access of the minor user to the online game using the stored parameter,
whereby different minor users issuing connection requests from the same computer are provided with different extents of access based on their respective stored parameters.

2. The method of claim 1 wherein step (a) comprises presenting an interface screen to the supervising user, the interface screen displaying to the supervising user information regarding gameplay behavior of the minor user.

3. The method of claim 1 wherein step (a) comprises presenting an interface screen to the supervising user, the interface screen displaying information regarding gameplay statistics for the minor user.

4. The method of claim 3 wherein the interface screen displays information regarding the most recent login time of the minor user.

5. The method of claim 3 wherein the interface screen displays information regarding total playtime of the minor user during the most recent game session of the minor user.

6. The method of claim 1 wherein step (b) comprises receiving, via the user interface, a parameter for prohibiting access of the minor user to the game for a predetermined amount of time.

7. The method of claim 1 wherein step (b) comprises receiving, via the user interface, a parameter for terminating a game session of the minor user.

8. The method of claim 1 wherein step (b) comprises receiving, via the user interface, a parameter for prohibiting access of the minor user to the game for a predetermined period of time on a predetermined day of the week.

9. The method of claim 1 wherein the step (f) comprises:
(f-1) transmitting, by the game server in response to the connection request, an authentication request to the database server, the transmitted request identifying the minor user and the time of the connection request;
(f-2) comparing, by the database server, the minor user and the time of the connection request to the database record associated with the minor user;
(f-3) sending the game server, by the database server, an authentication denial message; and
(f-4) refusing, by the game server, access of the minor user to the game.

10. The method of claim 1 wherein step (f) comprises:
(f-1) transmitting, by the game server in response to the connection request, an authentication request to the database server, the transmitted request identifying the minor user;
(f-2) sending, by the database server, the database record associated with the minor user;
(f-3) comparing, by the game server, the minor user and the time of the connection request to the transmitted database record; and
(f-4) refusing, by the game server, access of the minor user to the game responsive to the comparison.

11. The method of claim 1 wherein
presenting the user interface to the supervising user comprises presenting a calendar display; and
receiving the parameter for controlling access via the user interface comprises receiving a specification of a block of time during which the minor player's access is controlled.

12. The method of claim 1 wherein
receiving the parameter for controlling access via the user interface comprises receiving a specification of an amount of time during which the minor child is permitted access to the game.

13. An article of manufacture embodying computer-readable programs means for controlling access to a massively multi-player, online role-playing game, the article of manufacture comprising:
(a) computer-readable program means for presenting a user interface to a supervising user, the supervising user being a parent or guardian of a minor user;
(b) computer-readable program means for receiving, via the user interface, a parameter for controlling times at which the minor user can access the online game;
(c) computer-readable program means for transmitting to a database server the received parameter;
(d) computer-readable program means for storing the received parameter in a database record associated with the minor user;
(e) computer-readable program means for receiving, at a game server, a connection request from the minor user;
(e') computer-readable program means for authenticating the identity of the minor user who is using the computer that made the connection request received by the game server; and
(f) computer-readable program means for controlling access of the minor user to the massively multi-player, online role playing game using the stored parameter,
whereby different minor users issuing connection requests from the same computer are provided with different extents of access based on their respective stored parameters.

14. The article of manufacture of claim 13 further comprising computer-readable program means for presenting an interface screen to a user, the interface screen displaying to the supervising user information regarding gameplay behavior of the minor user.

15. The article of manufacture of claim 13 further comprising computer-readable program means for receiving, via the user interface, a parameter for prohibiting access of the minor user to the game for a predetermined amount of time.

16. The article of manufacture of claim 13 further comprising computer-readable program means for receiving, via the user interface, a parameter for terminating a game session of the minor user.

17. The article of manufacture of claim 13 further comprising computer-readable program means for receiving, via the user interface, a parameter for prohibiting access of the minor user to the game for a predetermined amount of time on a predetermined day of the week.

18. The article of manufacture of claim 13 further comprising:
(f-1) computer-readable program means for transmitting, by the game server in response to the connection request, an authentication request to the database server, the transmitted request identifying the minor user and the time of the connection request;
(f-2) computer-readable program means for comparing, by the database server, the minor user and the time of the connection request to the database record associated with the minor user;
(f-3) computer-readable program means for sending to the game server, by the database server, an authentication denial message; and
(f-4) computer-readable program means for refusing, by the game server, access of the minor user to the game.

19. The article of manufacture of claim 13 further comprising:
(f-1) computer-readable program means for transmitting, by the game server in response to the connection request, an authentication request to the database server, the transmitted request identifying the minor user;
(f-2) computer-readable program means for sending, by the database server, the database record associated with the minor user;
(f-3) computer-readable program means for comparing, by the game server, the minor user and the time of the connection request to the transmitted database record; and
(f-4) computer-readable program means for refusing, by the game server, access of the minor user to the game responsive to the comparison.

20. A system for controlling access to a massively multi-player, online role-playing game, the system comprising:
a user interface server presenting a user interface to a supervising user, the supervising user being a parent or guardian of a minor user, and receiving from the supervising user a parameter for controlling times at which the minor user can access the online game;
a database server in communication with the user interface server, the database server receiving from the user interface server the parameter for controlling access of the minor user to the game and storing the parameter in a database record associated with the minor user; and
a game server in communication with the database server, the game server receiving a connection request from the minor user and prohibiting access to the game responsive to data received from the database server.

21. The system of claim 20 wherein the database server further comprises an Open Database Connectivity-compliant database.

22. The system of claim 20 wherein the user interface server communicates with the database server over a first network and the database server communicated with the game server over a second network.

## Patentansprüche

1. Verfahren für eine elterliche Kontrolle des Zugriffs auf ein Online-Spiel, umfassend:
(a) Präsentieren eine Nutzer-Schnittstelle für einen Supervisor-Nutzer, wobei der Supervisor-Nutzer ein Elternteil oder Vormund eines minderjährigen Nutzers ist;
(b) Empfangen, über die Nutzer-Schnittstelle, eines Parameters zum Kontrollieren von Zeitpunkten, zu denen der minderjährige Nutzer einen Zugriff auf das Online-Spiel hat;
(c) Senden des empfangenen Parameters an einen Datenbank-Server;
(d) Speichern des empfangenen Parameters in einer Datenbank-Aufzeichnung, die mit dem minderjährigen Nutzer assoziiert ist;
(e) Empfangen, an einem Spiel-Server, einer Verbindungsanforderung von einem Computer, der durch den minderjährigen Nutzer verwendet wird;
(e') Authentifizieren der Identität des minderjährigen Nutzers, der den Computer benutzt, der die Verbindungsanforderung gemacht hat, die durch den Spiel-Server empfangen wurde; und
(f) Kontrollieren des Zugriffs des minderjährigen Nutzers auf das Online-Spiel unter Verwendung des gespeicherten Parameters,
wobei verschiedene minderjährige Nutzer, die Verbindungsanforderungen von dem gleichen Computer ausgeben, mit unterschiedlichen Ausmaßen eines Zugriffs bereitgestellt werden, auf Grundlage derer jeweiligen gespeicherten Parameter.

2. Verfahren nach Anspruch 1, wobei Schritt (a) ein Präsentieren eines Schnittstellen-Bildschirms für den Supervisor-Nutzer umfasst, wobei der Schnittstellen-Bildschirm dem Supervisor-Nutzer eine Information bezüglich eines Spielverhaltens des minderjährigen Nutzers anzeigt.

3. Verfahren nach Anspruch 1, wobei Schritt (a) ein Präsentieren eines Schnittstellen-Bildschirms für den Supervisor-Nutzer umfasst, wobei der Schnittstellen-Bildschirm eine Information bezüglich einer Spielstatistik für den minderjährigen Nutzer anzeigt.

4. Verfahren nach Anspruch 3, wobei der Schnittstellen-Bildschirm eine Information bezüglich der letzten Login-Zeit des minderjährigen Nutzers anzeigt.

5. Verfahren nach Anspruch 3, wobei der Schnittstellen-Bildschirm eine Information bezüglich einer Gesamtspielzeit des minderjährigen Nutzers während der letzten Spielsitzung des minderjährigen Nutzers anzeigt.

6. Verfahren nach Anspruch 1, wobei Schritt (b) ein Empfangen, über die Nutzer-Schnittstelle, eines Parameters zum Verbieten eines Zugriffs des minderjährigen Nutzers auf das Spiel für eine vorbestimmte Zeitgröße umfasst.

7. Verfahren nach Anspruch 1, wobei Schritt (b) ein Empfangen, über die Nutzer-Schnittstelle, eines Parameters zum Beenden einer Spielsitzung des minderjährigen Nutzers umfasst.

8. Verfahren nach Anspruch 1, wobei Schritt (b) ein Empfangen, über die Nutzer-Schnittstelle, eines Parameters zum Verbieten eines Zugriffs des minderjährigen Nutzers auf das Spiel für eine vorbestimmte Zeitperiode an einem vorbestimmten Tag der Woche umfasst.

9. Verfahren nach Anspruch 1, wobei der Schritt (f) umfasst:
(f-1) Senden, durch den Spiel-Server, ansprechend auf die Verbindungsanforderung, einer Authentifizierungsanforderung an den Datenbank-Server, wobei die gesendete Anforderung den minderjährigen Nutzer und den Zeitpunkt der Verbindungsanforderung identifiziert;
(f-2) Vergleichen, durch den Datenbank-Server, des minderjährigen Nutzers und der Zeit der Verbindungsanforderung mit der Datenbank-Aufzeichnung, die mit dem minderjährigen Nutzer assoziiert ist;
(f-3) Senden an den Spiel-Server, durch den Datenbank-Server, einer Authentifizierungsverweigerungsnachricht; und
(f-4) Ablehnen, durch den Spiel-Server, eines Zugriffs des minderjährigen Nutzers auf das Spiel.

10. Verfahren nach Anspruch 1, wobei der Schritt (f) umfasst:
(f-1) Senden, durch den Spiel-Server, ansprechend auf die Verbindungsanforderung, einer Authentifizierungsanforderung an den Datenbank-Server, wobei die gesendete Anforderung den minderjährigen Nutzer identifiziert;
(f-2) Senden, durch den Datenbank-Server, der Datenbank-Aufzeichnung, die mit dem minderjährigen Nutzer assoziiert ist;
(f-3) Vergleichen, durch den Spiel-Server, des minderjährigen Nutzers und des Zeitpunkts der Verbindungsanforderung mit der übertragenen Datenbank-Aufzeichnung; und
(f-4) Ablehnen, durch den Spiel-Server, eines Zugriffs des minderjährigen Nutzers auf das Spiel, ansprechend auf den Vergleich.

11. Verfahren nach Anspruch 1, wobei
ein Präsentieren der Nutzer-Schnittstelle an den Supervisor-Nutzer ein Präsentieren einer Kalenderanzeige umfasst; und
ein Empfangen des Parameters zum Kontrollieren eines Zugriffs über die Nutzer-Schnittstelle ein Empfangen einer Spezifikation eines Blocks einer Zeit umfasst, in der der Zugriff des minderjährigen Spielers kontrolliert wird.

12. Verfahren nach Anspruch 1, wobei
ein Empfangen des Parameters zum Kontrollieren eines Zugriffs über die Nutzer-Schnittstelle ein Empfangen einer Spezifikation einer Zeitgröße umfasst, in der das minderjährige Kind erlaubt ist, auf das Spiel zuzugreifen.

13. Herstellungsartikel, der ein computer-lesbares Programmmittel verkörpert zum Kontrollieren eines Zugriffs auf ein massives Multi-Player-Online-Rollenspiel, wobei der Herstellungsartikel umfasst:
(a) ein Computer-lesbares Programmmittel zum Präsentieren einer Nutzer-Schnittstelle für einen Supervisor-Nutzer, wobei der Supervisor-Nutzer ein Elternteil oder Vormund eines minderjährigen Nutzers ist;
(b) ein Computer-lesbares Programmmittel zum Empfangen, über die Nutzer-Schnittstelle, eines Parameters zum Kontrollieren von Zeitpunkten, zu denen der minderjährige Nutzer das Online-Spiel zugreifen kann;
(c) ein Computer-lesbares Programmmittel zum Übertragen des empfangenen Parameters an einen Datenbank-Server;
(d) ein Computer-lesbares Programmmittel zum Speichern des empfangenen Parameters in einer Datenbank-Aufzeichnung, die mit dem minderjährigen Nutzer assoziiert ist;
(e) ein Computer-lesbares Programmmittel zum Empfangen, an einem Spiel-Server, einer Verbindungsanforderung von dem minderjährigen Nutzer;
(e') ein Computer-lesbares Programmmittel zum Authentifizieren der Identität des minderjährigen Nutzers, der den Computer verwendet, der die Verbindungsanforderung gemacht hat, die durch den Spiel-Server empfangen wurde; und
(f) ein Computer-lesbares Programmmittel zum Kontrollieren eines Zugriffs des minderjährigen Nutzers auf das massive Multi-Player-Online-Rollenspiel, unter Verwendung des gespeicherten Parameters,
wobei unterschiedliche minderjährige Nutzer, die Verbindungsanforderungen von dem gleichen Computer ausgeben, mit unterschiedlichen Ausmaßen eines Zugriffs bereitgestellt werden, auf Grundlage derer jeweiligen gespeicherten Parameter.

14. Herstellungsartikel nach Anspruch 13, ferner umfassend ein Computer-lesbares Programmmittel zum Präsentieren eines Schnittstellen-Bildschirms für einen Nutzer, wobei der Schnittstellen-Bildschirm dem Supervisor-Nutzer eine Information bezüglich eines Spielverhaltens des minderjährigen Nutzers anzeigt.

15. Herstellungsartikel nach Anspruch 13, ferner umfassend ein Computer-lesbares Programmmittel zum Empfangen, über die Nutzer-Schnittstelle eines Parameters zum Verbieten eines Zugriffs des minderjährigen Nutzers auf das Spiel für eine vorbestimmte Zeitgröße.

16. Herstellungsartikel nach Anspruch 13, ferner umfassend ein Computer-lesbares Programmmittel zum Empfangen, über die Nutzerschnittstelle, eines Parameters zum Beenden einer Spielsitzung des minderjährigen Nutzers.

17. Herstellungsartikel nach Anspruch 13, ferner umfassend ein Computer-lesbares Programmmittel zum Empfangen, über die Nutzer-Schnittstelle, eines Parameters zum Verbieten eines Zugriffs des minderjährigen Nutzers auf das Spiel für eine vorbestimmte Zeitperiode an einem vorbestimmten Tag der Woche.

18. Herstellungsartikel nach Anspruch 13, ferner umfassend:
(f-1) ein Computer-lesbares Programmmittel zum Übertragen, durch den Spiel-Server, ansprechend auf die Verbindungsanforderung, einer Authentifizierungsanforderung an den Datenbank-Server, wobei die übertragene Anforderung den minderjährigen Nutzer und den Zeitpunkt der Verbindungsanforderung identifiziert;
(f-2) ein Computer-lesbares Programmmittel zum Vergleichen, durch den Datenbank-Server, des minderjährigen Nutzers und des Zeitpunkts der Verbindungsanforderung mit der Datenbank-Aufzeichnung, die mit dem minderjährigen Nutzer assoziiert ist;
(f-3) ein Computer-lesbares Programmmittel zum Senden an den Spiel-Server, durch den Datenbank-Server, einer Authentifizierungsverweigerungsnachricht;
und
(f-4) ein Computer-lesbares Programmmittel zum Ablehnen, durch den Spiel-Server, eines Zugriffs des minderjährigen Nutzers auf das Spiel.

19. Herstellungsartikel nach Anspruch 13, ferner umfassend:
(f-1) ein Computer-lesbares Programmmittel zum Übertragen, durch den Spiel-Server, ansprechend auf die Verbindungsanforderung, einer Authentifizierungsanforderung an den Datenbank-Server, wobei die übertragene Anforderung den minderjährigen Nutzer identifiziert;
(f-2) ein Computer-lesbares Programmmittel zum Senden, durch den Datenbank-Server, der Datenbank-Aufzeichnung, die mit dem minderjährigen Nutzer assoziiert ist;
(f-3) ein Computer-lesbares Programmmittel zum Vergleichen, durch den Spiel-Server, des minderjährigen Nutzers und der Zeit der Verbindungsanforderung mit der übertragenen Datenbank-Aufzeichnung; und
(f-4) ein Computer-lesbares Programmmittel zum Ablehnen, durch den Spiel-Server, eines Zugriffs des minderjährigen Nutzers auf das Spiel, ansprechend auf den Vergleich.

20. System zum Kontrollieren eines Zugriffs auf ein massives Multi-Player-Online-Rollenspiel, wobei das System umfasst:
einen Nutzer-Schnittstellen-Server, der eine Nutzer-Schnittstelle für einen Supervisor-Nutzer präsentiert, wobei der Supervisor-Nutzer ein Elternteil oder Vormund eines minderjährigen Nutzers ist, und zum Empfangen eines Parameters von dem Supervisor-Nutzer zum Kontrollieren von Zeitpunkten, an denen der minderjährige Nutzer das Online-Spiel zugreifen kann;
einen Datenbank-Server in Kommunikation mit dem Nutzer-Schnittstellen-Server, wobei der Datenbank-Server von dem Nutzer-Schnittstellen-Server den Parameter zum Kontrollieren eines Zugriffs des minderjährigen Nutzers auf das Spiel empfängt, und den Parameter in einer Datenbank-Aufzeichnung speichert, die mit dem minderjährigen Nutzer assoziiert ist; und
einen Spiel-Server in Kommunikation mit dem Datenbank-Server, wobei der Spiel-Server eine Verbindungsanforderung von dem minderjährigen Nutzer empfängt, und einen Zugriff auf das Spiel verbietet, ansprechend auf Daten, die von dem Datenbank-Server empfangen werden.

21. System nach Anspruch 20, wobei der Datenbank-Server ferner eine Open-Database-Connectivity-Compliant-Datenbank umfasst.

22. System nach Anspruch 20, wobei der Nutzer-Schnittstellen-Server mit dem Datenbank-Server über ein erstes Netz kommuniziert, und der Datenbank-Server mit dem Spiel-Server über ein zweites Netz kommuniziert.

## Revendications

1. Procédé de contrôle parental d'accès à un jeu en ligne, comprenant :
(a) présenter une interface utilisateur à un utilisateur superviseur, l'utilisateur superviseur étant un parent ou tuteur d'un utilisateur mineur ;
(b) recevoir, via l'interface utilisateur, un paramètre pour contrôler les moments auxquels l'utilisateur mineur peut accéder au jeu en ligne ;
(c) transmettre à un serveur de base de données le paramètre reçu ;
(d) stocker le paramètre reçu dans un enregistrement de base de données associé à l'utilisateur mineur ;
(e) recevoir, au niveau d'un serveur de jeu, une demande de connexion depuis un ordinateur utilisé par l'utilisateur mineur ;
(e') authentifier l'identité de l'utilisateur mineur qui utilise l'ordinateur qui a effectué la demande connexion reçue par le serveur de jeu ; et
(f) contrôler l'accès de l'utilisateur mineur au jeu en ligne en utilisant le paramètre stocké,
dans lequel différents utilisateurs mineurs émettant des demandes de connexion depuis le même ordinateur se voient attribuer différentes étendues d'accès basées sur leurs paramètres stockés respectifs.

2. Procédé selon la revendication 1, dans lequel l'étape (a) comprend la présentation d'un écran d'interface à l'utilisateur superviseur, l'écran d'interface affichant à l'utilisateur superviseur des informations relatives au comportement face au jeu de l'utilisateur mineur.

3. Procédé selon la revendication 1, dans lequel l'étape (a) comprend la présentation d'un écran d'interface à l'utilisateur superviseur, l'écran d'interface affichant des informations relatives à des statistiques de jeu de l'utilisateur mineur.

4. Procédé selon la revendication 3, dans lequel l'écran d'interface affiche des informations relatives au moment de l'ouverture de session la plus récente de l'utilisateur mineur.

5. Procédé selon la revendication 3, dans lequel l'écran d'interface affiche des informations relatives au temps de jeu total de l'utilisateur mineur pendant la session de jeu la plus récente de l'utilisateur mineur.

6. Procédé selon la revendication 1, dans lequel l'étape (b) comprend la réception, via l'interface utilisateur, d'un paramètre pour interdire l'accès de l'utilisateur mineur au jeu pendant une durée prédéterminée.

7. Procédé selon la revendication 1, dans lequel l'étape (b) comprend la réception, via l'interface utilisateur, d'un paramètre pour terminer une session de jeu de l'utilisateur mineur.

8. Procédé selon la revendication 1, dans lequel l'étape (b) comprend la réception, via l'interface utilisateur, d'un paramètre pour interdire l'accès de l'utilisateur mineur pendant une durée prédéterminée un jour prédéterminé de la semaine.

9. Procédé selon la revendication 1, dans lequel l'étape (f) comprend :
(f-1) transmettre, par le serveur de jeu en réponse à la demande de connexion, une demande d'authentification au serveur de base de données, la demande transmise identifiant l'utilisateur mineur et le moment de la demande de connexion ;
(f-2) comparer, par le serveur de base de données, l'utilisateur mineur et le moment de la demande de connexion à l'enregistrement de base de données associé à l'utilisateur mineur ;
(f-3) envoyer au serveur de jeu, par le serveur de base de données, un message de refus d'authentification ; et
(f-4) refuser, par le serveur de jeu, l'accès de l'utilisateur mineur au jeu.

10. Procédé selon la revendication 1, dans lequel l'étape (f) comprend :
(f-1) transmettre, par le serveur de jeu en réponse à la demande de connexion, une demande d'authentification au serveur de base de données, la demande transmise identifiant l'utilisateur mineur ;
(f-2) envoyer, par le serveur de base de données, l'enregistrement de base de données associé à l'utilisateur mineur ;
(f-3) comparer, par le serveur de base de données, l'utilisateur mineur et le moment de la demande de connexion à l'enregistrement de base de données envoyé ; et
(f-4) refuser, par le serveur de jeu, l'accès de l'utilisateur mineur au jeu en réaction à la comparaison.

11. Procédé selon la revendication 1, dans lequel
la présentation de l'interface utilisateur à l'utilisateur superviseur comprend la présentation d'un affichage de calendrier ; et
la réception du paramètre pour contrôler l'accès via l'interface utilisateur comprend la réception d'une spécification d'un bloc de temps pendant lequel l'accès du joueur mineur est contrôlé.

12. Procédé selon la revendication 1, dans lequel
la réception du paramètre pour contrôler l'accès via l'interface utilisateur comprend la réception d'une spécification d'une quantité de temps pendant laquelle l'enfant mineur se voit autoriser l'accès au jeu.

13. Article manufacturé incorporant des moyens de programmes lisibles par ordinateur pour contrôler l'accès à un jeu de rôle en ligne massivement multijoueur, l'article manufacturé comprenant :
(a) un moyen de programme lisible par ordinateur pour présenter une interface utilisateur à un utilisateur superviseur, l'utilisateur superviseur étant un parent ou tuteur de l'utilisateur mineur ;
(b) un moyen de programme lisible par ordinateur pour recevoir, via l'interface utilisateur, un paramètre pour commander des moments auxquels l'utilisateur mineur peut accéder au jeu en ligne ;
(c) un moyen de programme lisible par ordinateur pour transmettre à un serveur de base de données le paramètre reçu ;
(d) un moyen de programme lisible par ordinateur pour stocker le paramètre reçu dans un enregistrement de base de données associé à l'utilisateur mineur ;
(e) un moyen de programme lisible par ordinateur pour recevoir, au niveau d'un serveur de jeu, une demande de connexion en provenance de l'utilisateur mineur ;
(e') un moyen de programme lisible par ordinateur pour authentifier l'identité de l'utilisateur mineur qui utilise l'ordinateur qui a effectué la demande de connexion reçue par le serveur de jeu ; et
(f) un moyen de programme lisible par ordinateur pour contrôler l'accès de l'utilisateur mineur au jeu de rôle en ligne massivement multijoueur en utilisant le paramètre stocké ;
dans lequel différents utilisateurs mineurs émettant des demandes de connexion depuis le même ordinateur se voient attribuer différentes étendues d'accès basées sur leurs paramètres stockés respectifs.

14. Article manufacturé selon la revendication 13, comprenant en outre un moyen de programme lisible par ordinateur pour présenter un écran d'interface à un utilisateur, l'écran d'interface affichant à l'utilisateur superviseur des informations relatives au comportement de jeu de l'utilisateur mineur.

15. Article manufacturé selon la revendication 13 comprenant en outre un moyen de programme lisible par ordinateur pour recevoir, via l'interface utilisateur, un paramètre pour interdire l'accès de l'utilisateur mineur au jeu pendant une durée prédéterminée.

16. Article manufacturé selon la revendication 13, comprenant en outre un moyen de programme lisible par ordinateur afin de recevoir, via l'interface utilisateur, un paramètre pour terminer une session de jeu de l'utilisateur mineur.

17. Article manufacturé selon la revendication 13, comprenant en outre un moyen de programme lisible par ordinateur pour recevoir, via l'interface utilisateur, un paramètre pour interdire l'accès de l'utilisateur mineur au jeu pendant une durée prédéterminée un jour prédéterminé de la semaine.

18. Article manufacturé selon la revendication 13, comprenant en outre :
(f-1) un moyen de programme lisible par ordinateur pour transmettre, via le serveur de jeu en réponse à la demande de connexion, une demande d'authentification au serveur de base de données, la demande transmise identifiant l'utilisateur mineur et le moment de la demande de connexion ;
(f-2) un moyen de programme lisible par ordinateur pour comparer, via le serveur de base de données, l'utilisateur mineur et le moment de demande de connexion à l'enregistrement de base de données associé à l'utilisateur mineur ;
(f-3) un moyen de programme lisible par ordinateur pour envoyer au serveur de jeu, via le serveur de base de données, un message de refus d'authentification ; et
(f-4) un moyen de programme lisible par ordinateur pour refuser, via le serveur de jeu, l'accès de l'utilisateur mineur au jeu.

19. Article manufacturé selon a revendication 13, comprenant en outre :
(f-1) un moyen de programme lisible par ordinateur pour transmettre, via le serveur de jeu en réponse à la demande de connexion, une demande d'authentification au serveur de base de données, la demande transmise identifiant l'utilisateur mineur ;
(f-2) un moyen de programme lisible par ordinateur pour envoyer, via le serveur de base de données, l'enregistrement de base de données associé à l'utilisateur mineur ;
(f-3) un moyen de programme lisible sur ordinateur pour comparer, via le serveur de jeu, l'utilisateur mineur et le moment de demande de connexion à l'enregistrement de base de données transmis ; et
(f-4) un moyen de programme lisible par ordinateur pour refuser, via le serveur de jeu, l'accès de l'utilisateur mineur au jeu en réaction à la comparaison.

20. Système pour contrôler l'accès à un jeu de rôle en ligne massivement multijoueur, le système comprenant :
un serveur d'interface utilisateur présentant une interface utilisateur à un utilisateur superviseur, l'utilisateur superviseur étant un parent ou tuteur de l'utilisateur mineur, et recevant de l'utilisateur superviseur un paramètre pour contrôler des moments auxquels l'utilisateur mineur peut accéder au jeu en ligne ;
un serveur de base de données en communication avec le serveur d'interface utilisateur, le serveur de base de données recevant du serveur d'interface utilisateur le paramètre pour contrôler l'accès de l'utilisateur mineur au jeu et stockant le paramètre dans un enregistrement de base de données associé à l'utilisateur mineur ; et
un serveur de jeu en communication avec le serveur de base de données, le serveur de jeu recevant une demande de connexion en provenance de l'utilisateur mineur et interdisant l'accès au jeu en réaction à des données reçues par le serveur de base de données.

21. Système selon la revendication 20, dans lequel le serveur de base de données comprend en outre une base de données compatible ODBC (Open DataBase Connectivity).

22. Système selon la revendication 20, dans lequel le serveur d'interface utilisateur communique avec le serveur de base de données sur un premier réseau et le serveur de base de données communique avec le serveur de jeu sur un second réseau.
